## Europäisches Patentamt
## European Patent Office
## Office européen des brevets

(11) Publication number: **0 137 090**
**A1**

(12) # EUROPEAN PATENT APPLICATION

(21) Application number: 83830200.8

(22) Date of filing: 13.10.83

(51) Int. Cl.⁴: **A 61 C 5/12**
**A 61 C 17/04**

(43) Date of publication of application:
17.04.85 Bulletin 85/16

(84) Designated Contracting States:
AT BE CH DE FR GB IT LI LU NL SE

(71) Applicant: **Totaro, Giuseppe**
**via Fuà Fusinato 24**
**Rivigo(IT)**

(72) Inventor: **Totaro, Giuseppe**
**via Fuà Fusinato 24**
**Rivigo(IT)**

(74) Representative: **Sassatelli, Franco**
**INIP via Ruggi 5**
**I-40137 Bologna(IT)**

(54) Screening device for the mouth cavity in dental operations.

㊗ The instrument consists of an elastic sheet (6) borne on three sides by an elastic frame of exhaustion (1,2,5) with two ways fitted to the central exhauster, which is supplied with another or two other holds for the local suctions (11-13). The sheet is centrally held by the tooth and, owing to its elastic nature, forms a cavity for the collection of liquids. The employ of the flexible frame permits a shape adjustment and also to accede to the mouth cavity as well as not to cause any hindrance to breathing. The proceeding can be carried out by the only operator and automatically performs the liquid elimination.

FIG. 1

EP 0 137 090 A1

- 1 -

Screening device for the mouth cavity in dental operations.

The invention refers to an instrument to be applied by the only operator to one or more teeth of the patient, which permits to isolate the operation zone and automatically carries out the picking up and elimination of the liquide of water jets coming from the hyfrical injectors in the conventional tools, sucking them from a collection cavity which the operator each time adjust to the contingent employ requirements. Furthermore the flexibility of the screening device allows to the operator to reach the oral cavity with out being obliged to disinsert the tool or otherwise to set it so as not to hinder the patient's respiration. The possibility if insulationg the spittle in the mouth cavity on the side of the intervention allows to operate in aseptic room and to avoid that the medication substances and the instrument enter the patient's mouth and might be swallowed.

The present apparatuses have a limited employ for they have fundamental inconveniences of practicability and require the presence of one or two assistants beside the physician, which cause high costs of the intervention. The present procedure foresees the necessity of establishing the points to bore on an elastic and waterproof sheet brought in the position on the arch, then their boring and the introduction in the right one of a clamp with an arched spring so as to bring its inverted fins in retention position between the parts spread aside of the bore. The clamp holding the sheet is then fitted on the tooth in shape correspondence. The sheet is afterwards stabilized in tension condition proceeding in subsequent phases to tending and fixing of border parts on tending reliefs of a stiff frame with perimetral disposition.

In the treatment, the entering in operation of the tool and, therefore, of the water injector handled by the operator requires the employ of an assistant who has to suck the liquids by means of the aspirator in steady movement. This does not avoid the liquids to get out in all direction damaging the patient's chothes and soiling the surrounding room. It must be added to this that, in this motion, the aspirator interferes with the tool used by the operator: this may lead to a collision between the instruments and hinders the visual perception of the part. In addition, other inconveniences are to be noted when one has to operate in the inner part of the mouth, the frame must removed by unhooking it form the tooth. The apparatus which covers the mouth with a fixed structure might moreover hinder the patient's respiration and consequently it must be removed. The mandible movement operating on the radial tensions, in addition, unhinges the tie condition of the clamp: this is due to the fact that the sheet must be strongly tended on the stiff frame to allow the hinging condition through its elastic force. The invention permits the solution of the above problems by means of and instrument of new conception which is directly and quickly fitted on one or more teeth by the single operator, is available in different arrangements only by hand shifting and automatically eliminates the liquids.

The instrument consists of a square, waterproof and elastic sheet solidarily brought one three sides by a sucking device with two ways formed by a pair of small popes with bores on the inner side. These cannules are fixed by means of flexible frame in plasticized iron passing through them and uniting them on the intermediate point of the lower side, below which they enter a common collector fitted on the central sucker with another or two other holds. All the reaches the surgical sucker.

For mounting, the operator lays the instrument on the relevant arch part and, with shape correspondence, marks one or more bores according to the number of teeth he has to intervene on in that phase. He then chooses the clamp he deems fit among the available ones and mount it to the chosen bores. He then brings the instrument in position by fitting the clamp on the tooth. The vinculating condition of the device can be obtained by spreading apart the sheet with the fingers to widen the bore and by inserting the pair of reversed fins of the clamp into it. In mounting condition, the elastic property of the sheet centrally anchored to the tooth is forming a cavity in which the liquids are gathered. For suiting to the contingent employ requirements, the operator can modify the disposition of the screening part by bending the flexible frame by hand in different ways. The oral cavity becomes thus thoroughly accessible by forming the screening part in the valve shape. The access can be obtained by shifting the valve free to move either to the right or to the left when it is one the arrow plane, upwards of downwards when it is on the transversal plane. This permits to carry out the mouth inside X-graphy and the anaesthesy on any tooth whatever, assuring to keep the sterility during the canal cures. When the instrument already fitted has to be applied to a further tooth, the shape of a fishing net must be given to it so that its deepest part reaches the chosen tooth without tension. This point is marked and bored. A clamp is then mounted to the bore and fixed to the tooth by using a special tong.

For particular requirements, beside the marginal suction, a local mobile sucking has been foreseen. A small pipe is used to fit on the clutch of the common collector with small bores on the sucking end and inside a plasticized iron wire, freely sliding, which allows bending and to remain in the wished fitting position. For positioning, its end part is passed around the clamp for leaving it to sck near the tooth. In case of obstruction, but the small pipe has to be slipped, leaving the wire in the conduct to insert, as it will serve as a guide for another pipe.

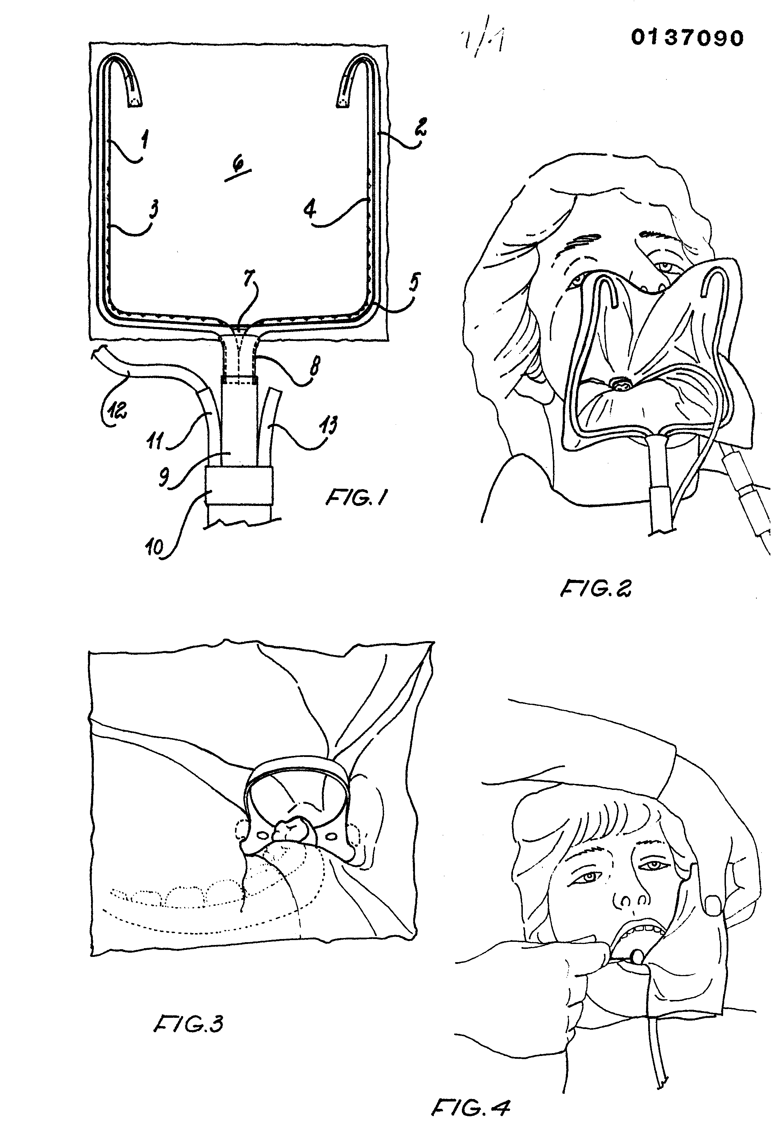

A form of execution is illustrated as a mere indication and, therefore, not limiting, in the drawings of Table 1 where fig. 1 is the view of an instru-

ment according to the invention, employing two mobile conducts for the local suction. Fig. 2 is the view of the same tool fitted on a tooth. The collectiong cavity can be observed formed by the elastic sheet brought by the sucking two-way device, by means of the traction on its central part by the tooth. Fig. 3 is the view of the clamp binding the instrument on the tooth. Fig. 4 shows the valve-shaped instrument to permit to reach the back part of the mouth cavity withourt unhinging the instrument. In a version, the instrument employs a fixed marginal sucking device consisting of pair of pipes 1 and 2 with bores 3 and 4 on their inside and stabilized by a "U"-shaped frame in plasticized iron rod 5 passing through them to form the flexible structure supporting the integral rubber sheet 6 on three sides. For connecting the two pipes on a low intermediate point, sealing 7 bas been foreseen. On the upper side, the frame structure with sucking two-way device formed by components 1, 2 and 5 shows end bendings towards the sheet inside that confer additional stabilization. On the lower side, the pipes are set together sleeve 8 which inserts them into the common collector 9 which leads to duct 10 fitted on the cental aspirator. On 10, clutch 11 of pipe 12 is mounted which can be employed for the local mobile sucking. For particular requirements, another local aspiration pipe is foreseen on clutch 13 fitted on the duct.

The particulars of the sucking frame execution, the anchoring means on the teeth, the disposition of the sucking bores, the materials and anything else in the connection may be otherwise foreseen.

Claims.

1) Screening device for the mouth cavity in dental operations, characterized by the fact that it consists of a square, waterproof and elastic sheet solidarily brought on three sides by a sucking device with two ways formed by a pair of small pipes with bores on the inner side. These cannules are fixed by means of flexible frame in placized iron passing through them and uniting them on the intermediate point of the lower side, below which they enter a common collector fitted on the central sucker with another or two other holds. All that reaches the surgical sucker.

2) Screening device for the mouth cavity in dental operations, according to the previouc claim, characterized by the fact that for mounting, the operator lays the instrument on the relevant arch part and, with shape correspon dence marks one of more bores according to the number of teeth he has to intervene on in taht phase. He then choosen the clamp he deems fit among the available oners and mount it to the chosen bore. He then brings the instrument in position by fitting the clamp on the tooth. The vinculating condition of the device cna be obtained by spreading apart the sheet with the fingers to widen the bore and by inserting the pair of reversed fins of the clamp into it.

3) Screening device for the mouth cavity in dental operations, according to the previouc claims, characterized by the fact that the elastic property of the sheet centrally anchored to the tooth is forming a cavity in which the liquinds are gathered. For suiting to the contingent employ requirements, the operator can modify the disposition of the screening part by bending the flexible frame by hand in different ways. The oral cavity beco mes thus thoroughly accessible by forming the screening part in the valve shape. The access can be obtained by shifting the valve free to move either to the right or to the left when it is on the arrow plane, upwords, or down wards when it is on the transversal plane.

4) Screening device for the mouth cavity in dental operation, according to

- 2 -

0137090

the previous claims, characterized by the fact that for particular requi rements, beside the marginal suction, a local mobile sucking has been fo reseen. A small pipe is used to fit on the clutch of the common collector with small bores on the sucking end and inside a plasticized iron wire, freely sliding, which allows bending and to remain in the wished fitting position. For positioning, its end part is passed arounf the clamp for leaving it to suck near the tooth. In case of obstruction, but the small pipe has to be slipped, leaving the wire in the conduct to insert, as it will serve as a guide for another pipe.

5) Screening device for the mouth cavity in dental operations, according to the previous claims, characterized by the fact that the instrument employs a fixed marginal sucking device consisting of pair of pipes 1 and 2 with bores 3 and 4 on their inside and stabilized by a "U"-shaped frame in plasticized iron rod 5 passing through them to form the flexible struc ture supporting the integral rubber sheet 6 on three sides. For connecting the two pipes on a low intermediate point, sealing 7 has been foreseen. On the upper side, the frame structure with sucking two-way device formed by components 1, 2 and 5, shows end bendings towards the sheet inside that confer additional stabilization. On the lower side, the pipes are set to gether sleeve 8 which inserts them into the common collector 9 which leads to duct 10 fitted on the central aspirator.

6) Screening device for the mouth cavity in dental operation, according to the previous claims, characterized by the fact that on 10, clutch 11 of pipe 12 is mounted which can be employed for the local mobil sucking. For particular requirements, another local aspiration pipe is foreseen on clutch 13 fitted on the duct.

1/1                    0137090

FIG.1

FIG.2

FIG.3

FIG.4

0137090

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | US-A-4 261 697 (NEWITTER)<br>* Whole document * | 1 | A 61 C 5/12<br>A 61 C 17/04 |
| A | | 2-6 | |
| Y | US-A-4 259 067 (NELSON)<br>* Column 5, lines 1-25; figure 5 * | 1 | |
| A | US-A-4 240 789 (ROSENTHALER)<br>* Column 2, line 50 - column 3, line 2; figures 1, 6 * | 2-4 | |
| A | DE-C- 100 377 (WITTKOWSKI) | | |
| A | US-A-4 215 477 (SHANEL) | | TECHNICAL FIELDS SEARCHED (Int. Cl. ³)<br><br>A 61 C 5/00<br>A 61 C 17/00 |
| A | US-A-3 396 468 (DAYHOFF) | | |

The present search report has been drawn up for all claims

| Place of search<br>BERLIN | Date of completion of the search<br>25-05-1984 | Examiner<br>SIMON J J P |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82